# EUROPEAN PATENT APPLICATION

(11) **EP 3 819 335 A1**
(43) Date of publication of application: **12.05.2021**
(21) Application number: 19208334.3
(22) Date of filing: 11.11.2019
(51) Int. Cl.: C08K 7/20, C09D 4/00, C09D 133/14

(54) **COATING COMPOSITION**

(71) Applicant: TIGER Coatings GmbH & Co. KG, 4600 Wels (AT)
(72) Inventor: KEPLINGER, Juergen, 4600 Wels (AT); KAYNAK, Baris, 4600 Wels (AT)
(74) Representative: Sonn & Partner Patentanwälte

(57) **Abstract**

A radiation curable coating composition comprising unsaturated prepolymers in an amount of between 10 and 85 wt%, preferably between 15 and 60 wt% and even more preferably between 20 and 45 wt% of the total composition for building up a coating matrix, characterised in that the composition comprises furthermore modifying particles having a Mohs hardness of at least 5, preferably at least 6, and a mean particle size d(50) between 30 and 200 µm, preferably between 40 and 150 µm, more preferably between 60 and 130 µm and most preferably between 75 and 120 µm, a coating made by using said radiation curable coating composition, a coating method, comprising said radiation curable coating composition.

## Description

The present invention relates to the field of coating methods and coating compositions, in particular coatings for construction material.

Coatings for construction materials are often provided by applying layer after layer onto the material until the final coating is achieved.

Exemplary state of the art coating methods comprise the steps of
i. providing a substrate, in particular a construction material,
ii. applying a first layer of a first liquid coating composition onto said substrate,
iii. applying a second layer of a second liquid, radiation curable coating composition.

The first liquid coating composition is typically used as a primer layer. Said primer (= first coating layer) provides on the one hand good compatibility between said primer composed of the first coating composition and the second coating layer composed of the second coating composition and on the other hand provides good adherence to the surface of the substrate and to the further coating layer. Additionally, said primer needs to provide good water resistance, high weatherability and sufficient flexibility.
UV-curable (UV) or light emitting diode (LED) curable or electron beam (EB) curable compositions are preferably used as primers.

The second coating layer may be similar to the first coating layer. Most often, UV-curable or LED curable or electron beam (EB) curable compositions are preferably used.
One disadvantage of UV-curable coating compositions is the shrinkage behaviour upon curing. High shrinkage leads to increase of the internal stress in the coating and therefore, the impact resistance of the coatings may be decreased.

EP 1 110 926 relates to a process for the surface treatment of cement-bound building materials, in particular concrete wherein a radiation curable, water- and solvent free lacquer comprising at least 63 % by weight of pentaerythritol triacrylate, 22.5 - 27.5 % by weight of N-vinyl-2-pyrrolidone, 4.3 - 5.3 % by weight of photoinitiator and 0.18 - 0.22 % by weight of wetting agents is applied to the surface of the building material and subsequently treated with radiation.

EP 2 147 157 relates to an anti-abrasion layer comprising a mixture of irregular hard material particles and round solid material particles embedded in a matrix material, wherein the hard material particles have a Mohs hardness rating of at least 6 and the solid material particles have a Mohs hardness rating of at least 3 wherein the mean particle diameter of the solid material particles is equal to or less than the mean particle diameter of the hard material particles, wherein the irregular hard material particles are selected from the group consisting of aluminium oxide, corundum, molten corundum, sintered corundum, zirconium corundum, sol-gel corundum, silicon carbide and boron carbide, wherein the round solid material particles that are substantially free of cutting edges are full spheres made of glass and/or sintered ceramic, wherein the ratio of round solid material particles that are substantially free of cutting edges in the embedded mixture is 10 - 50 wt.-%, based on the total amount of embedded particles. Additionally, EP 2 147 157 also relates to the use of an anti-abrasion layer is described above for anti-abrasion surfaces.

US 8 313 809 relates to multi-layered coatings, suitable to be disposed on various substrates, as well as processes for producing the coatings. Coatings according to some embodiments of the disclosure are provided on a substrate by coating the substrate with a first layer, optionally coating the first layer with a second layer, and coating the second layer, when selected to be present with a top layer. Such coating structures can be applied to a substrate such as a garage floor, a truck bed, railcar, seatainer, tractor-trailers and the like within a single day, and can often be ready for human foot traffic within 2-4 hours after application of the top layer and can be ready for heavy traffic such as automobiles within 12-24 hours after application of the top layer.

US 2012164402 relates to a decorative concrete block comprising a block body made of concrete; and a plurality of ink dots being obtained by curing ink droplets of an active energy curable ink, and forming an image on an outer surface of the block body.

WO 2016202680 is regarded as the closest prior art and relates to process for manufacturing coated fiber cement products, wherein said process comprises the steps of: (i) providing a cured fiber cement product having at least one surface; (ii) optionally applying a primer to the at least one surface of the cured fiber cement product; (iii) providing a first layer of a first radiation curable composition to the at least one surface; (iv) partially curing the first layer of radiation curable composition by radiation; (v) providing a second layer of a second radiation curable composition to the partially cured first layer, the second radiation curable composition comprising pigments; and (vi) curing the first and the second layer of radiation curable composition by radiation. Additionally, WO 2016202680 also relates to a fiber cement product obtainable by the process as described above. WO 2016202680 describes a two-(or three) layer coating system based on UV-curable coating compositions, whereas the second layer comprises pigments and isocyanate functional polyurethanes with unsaturated double bonds. Although such UV-curable coatings may provide good adhesion between the polymer matrix to the pigments and especially to the substrate, the scratch, abrasion and mar- resistance are often insufficient for exterior applications. Further, due to the smooth surface of such coatings, the slip resistance is poor, which is an issue in case the coating is used for horizontal applications (e.g.: for flooring or parking lots). Finally, a glossy surface appearance is often obtained, although a matte or even dull-matte surface appearance would be desirable. The isocyanate (NCO) groups will be not react completely during the curing of the coating and residual reactive NCO groups will be present in the cured coating. These kinds of reactive groups are able to react with water or humidity and therefore, the long-term exterior durability is significantly reduced.

### Summary of the invention:

The present invention was made in order to overcome the disadvantages of the state of the art and in order to provide a topcoat and a coating method that may generate coatings with increased hardness thereby resulting enhanced mar and scratch resistance as well as slip resistance. The main object of the present invention is to provide an improved coating method, particularly suitable for coating of construction material, said method providing a protective and/or decorative coating and an improved topcoat, particularly suitable for construction material, with said improved mechanical properties.

### Detailed description of the invention:

The object is achieved by a radiation curable coating composition according to the independent claim 1. Preferred embodiments are specified in the dependent claims.

The radiation curable coating composition comprises unsaturated prepolymers in an amount of between 10 and 85 wt%, preferably between 15 and 60 wt% and even more preferably between 20 and 45 wt% of the total composition for building up a coating matrix.

The composition is characterised in that the composition comprises furthermore modifying particles having a Mohs hardness of at least 5, preferably at least 6, and a mean particle size d(50) between 30 and 200 µm, preferably between 40 and 150 µm, more preferably between 60 and 130 µm and most preferably between 75 and 120 µm.

It was found that the addition of modifying particles having a Mohs hardness of at least 5, preferably at least 6 turned out to particularly advantageous as both the mar and scratch resistance as well as the slip resistance were significantly improved. Additionally, the modifying particles may cause microstructures on the surface after curing of the coating and thus reduce the surface area that could be affected by mechanical stress. Furthermore, the micro structuring of the coating surface may increase the slip resistance and the light scattering on the surface, the latter enables the change of visual aspects of the surface, like a glossy or matt optical appearance.

It was also found that by addition of modifying particles the shrinkage of the coating composition upon curing may be reduced leading to improved mechanical properties.

Additionally, the modifying particles may absorb UV light and therefore, the coating composition may serve as a UV barrier for the beneath coating layers, resulting in improved UV stability of the layer package.

The unsaturated prepolymers are capable to react and crosslink with each other and optionally also with other components within the composition in a radical mechanism, which may be triggered by photo initiators, which may also be present in the composition, thereby forming a cross-linked network. However, the crosslinking reaction may also be induced by high energy radiation or electron beams without any photo initiators. Additionally to said unsaturated prepolymers, the compositions may comprise diluents, in particular reactive diluents, pigments, fillers and additives such as, light and/or heat stabilizers, defoaming agents, surfactants, catalysts, synergists and further additives as known in the art.

Reactive diluents may be added to the composition in order to adjust the rheological properties, such as the viscosity, of the composition. Additionally, the network density may be influenced by addition of these compounds. Often, a mixture of various reactive diluents may be useful to adjust the properties as desired. Reactive diluents are typically regarded as low molecular weight compounds, solvents, monomers or short oligomers with at least one functional group that is capable of reacting with at least one other component of the composition, in particular with the unsaturated prepolymers. Preferably, acrylate functional reactive diluents with a functionality of 1-3 are used. Commercially available, non-limiting, examples of suitable reactive diluents are monofunctional acrylates like isobornylacrylate (IBOA) (Allnex), cyclic trimethylolpropane formal acrylate SR531 (Sartomer) lauryl acrylate SR335 (Sartomer), tridecyl acrylate Miramer M124 (Miwon), difunctional acrylates like hexanediol diacrylate (HDDA), dipropylene glycol acrylate, esterdiol diacrylate (EDDA) SR606A (Sartomer), tricyclo aluminum decanedimethanol diacrylate (TCDDMDA) SR833S (Sartomer), tricyclodecanediol diacrylate Ebecryl 130 (Allnex), dipropylene glycol diacrylate (DPGDA) Miramer M222 (Miwon), triethylene glycol diacrylate (TEGDA) Miramer M220 (Miwon), trifunctional acrylates like trimethylolpropane triacrylate (TMPTA) Miramer M300 (Miwon), trimethylolpropane triacrylate TMP(EO)6TA M3160 (Miwon), Laromer® LR 8863 (BASF), tris (2-hydroxy ethyl) isocyanurate triacrylate (THEICTA) SR368 (Sartomer).

According to a preferred embodiment, the reactive diluent comprises IBOA, HDDA, TCDDMDA, DPGDA and/or TEGDA. The use of IBOA and HDDA may improve the adhesion of the coating layer to the previous layer(s). TCDDMDA and DPGDA may improve the thermal stability and TEGDA may improve the flexibility and hydrophobic behavior of the coating.

In general, various materials for the modifying particles may be employed for the present invention. However, glass particles and/or polyurethane particles and/or aluminum oxide, preferably corundum particles, and/or (meth)acrylate particles, and/or polyolefin particles, preferably polypropylene particles, are preferably used.

According to a particularly preferred embodiment of the invention the modifying particles are selected from the group consisting of glass particles, polyurethane particles, aluminum oxide, preferably corundum, particles, (meth)acrylate particles and polyolefin, preferably polypropylene, particles, preferably filled glass particles.

According to a further particularly preferred embodiment of the invention the coating composition comprises at least first and second modifying particles, wherein the difference of the maximum particle size d(90) of the first and second modifying particles is at least 15 µm, preferably at least 25 µm and more preferably at least 30 µm and/or the difference of the minimum particle size d(10) of the first and second modifying particles is at least 10 µm, preferably at least 15 µm and more preferably at least 20 µm and/or the difference in the mean particle size d(50) of the first and second modifying particles is at least 10 µm, preferably at least 20 µm and more preferably at least 25 µm, wherein the first modifying particles have a mean particle size d(50) between 70 µm and 110 µm and the second modifying particles have a mean particle size d(50) between 90 µm and 150 µm. For example, the first modifying particles may have a mean particle size d(50) between 80 and 90 µm, e.g.: 85 µm and the second modifying particles may have a mean particle size between 105 and 120 µm, e.g.: 112 µm.

The differences in the minimum, maximum and/or the mean particle sizes significantly improves the slip resistance and the surface hardness of the coating layer. The difference in the minimum, maximum and/or the mean particles sizes of the at least first and second modifying particles further improves the formation of a micro structure on the surface during the curing of the coating composition. The at least first and second but also further modifying particles may be chosen from the same or different materials. For example, both the first and second modifying particles may be polyurethane particles or the first modifying particles may be glass particles and the second modifying particles may be polyurethane particles. As a further example, both the first and second modifying particles may be glass particles. Also, the first modifying particles may be glass particles, the second modifying particles may be polyurethane particles and as additional modifying particles a different type of glass particles, e.g.: with a different particle size distribution, may be employed.

According to a further particularly preferred embodiment of the invention the first and second modifying particles are glass particles, further characterised in that polyurethane based modifying particles are added as third modifying particles.

According to a further particularly preferred embodiment of the invention the coating composition is characterised in that the composition further comprises silica. The addition of silica may significantly decrease the gloss of the coating and thus coatings with matte or dull-matte appearance may be obtained. Further, the addition of silica may be used to adjust the viscosity of the coating composition, as in general higher contents of silica result in an increase of the viscosity of the composition. The adjustment of the viscosity of the composition is very important as on the one hand a suitable viscosity is required to obtain the desired layer thickness of the coating upon application of the layer and on the other hand the viscosity may be adjusted such that a sedimentation of the modifying particles is avoided. Different kind of silica particles, e.g.: having different particle size distributions may be added to the composition. Preferably a mixture of a first type of silica particles with a mean particle size d(50) of between 3 and 7 µm and a second type of silica particles with a mean particles size d(50) between 8 and 15 µm is employed; for example the first type of silica particles may have a d(50) of 5 µm and the second type of silica particles may have a d(50) of 10 µm. The ratio of the first and second type of silica particles may be between 1:1 and 5:1, preferably between 1.5:1 and 4:1 and more preferably between 1.8:1 and 2.5:1, e.g.: 2:1. Further, the silica may be modified on the surface with functional groups that are capable of reacting with at least one other component of the composition, in particular with the unsaturated prepolymers. Preferably, these functional groups are chosen from the group consisting of vinyl, acrylate, methacrylate, allyl and mixtures thereof. Apart from silica, other mineral particles with the properties as defined above may be used instead or in a combination with silica.

According to a further particularly preferred embodiment of the invention, the coating composition has a viscosity of between 300 and 600 mPas, preferably between 350 and 500 mPas and more preferably between 400 and 450 mPas at 50°C. Adjusting the viscosity as described above turned out advantageous in order to obtain the desired layer thickness of the coating upon application and on the other hand to avoid the sedimentation of the modifying particles, in particular upon storage of the composition.

Additionally, it was also found that the shape of the modifying particles plays a role for the functionality of the modifying particles, however, in general any shape of the modifying particles may be used for the invention as described within this application.

According to a further particularly preferred embodiment of the invention the coating composition is characterised in that the modifying particles have a spherical shape with a sphericity of at least 0.7, preferably at least 0.8 and even more preferably at least 0.85. The use of essentially spherical particles with a sphericity of at least 0.7, preferably at least 0.8 and even more preferably at least 0.85 was found to be advantageous because the spherical shape of such particles may induce a slide bearing like effect to the surface of the coating, especially when the surface is attacked by sharp or acute articles. Hence, the surface is generally higher resistant against scratches and abrasion and additionally the resistance against chemical attacks e.g. from solvents, alkaline and acidic solutions may be improved.

Surprisingly, it was found that functional modifying particles have a beneficial effect on the properties of the coating layer. Functional modifying particles are to be understood within this application as modifying particles that possess functional groups, such as unsaturated bonds, on the surface that are capable of reacting with at least one other component, in particular the unsaturated prepolymers, of the coating composition during the curing reaction of the coating. However, in general, both functional and non-functional modifying particles may be employed but functional modifying particles are preferably used. The functional modifying particles carry reactive groups, like amine, epoxy, hydroxyl, carboxylic acid, isocyanate, blocked isocyanate, peroxide, azo, allyl, vinyl, acrylates, methacrylates and other carbon-carbon unsaturated bonds. These functional modifying particles may improve the mechanical, chemical, thermal and weather resistance of the cured coating. The functional and non-functional modifying particles may be chosen from inorganic compounds (like glass, zinc oxide, zirconium oxide and further metal oxides, alumino silicates and wollastonite) with a Mohs hardness at least 5, preferably at least 6, and organic compounds such as organic polymeric particles like polyolefins, in particular polypropylene and polyurethanes and the like. Glass beads and polyurethane particles, both may be functional and non-functional and mixtures thereof, are preferably used. In case reactive groups are present on the surface of the modifying particles, these are able to react with the matrix of the coating composition during curing and due to the covalent bonding with the matrix the previously mentioned properties may be improved.

According to a further particularly preferred embodiment of the invention the coating composition is characterised in that the modifying particles comprise functional groups on their surface, such as unsaturated bonds, preferably unsaturated carbon-carbon bonds and more preferably carbon-carbon double bonds. Hence, the modifying particles may be incorporated into the coating matrix by chemical reactions resulting in the formation of covalent bonds between the functional modifying particles and the coating matrix. This leads to a tougher structure of the layer resulting in a significant improvement of the mar and scratch resistance of the layer. Additionally, the weatherability as well as the long term stability of the layer and thereby of the entire coating may be improved by the tougher network structure of the layer.

According to a further particularly preferred embodiment of the invention the coating composition is characterised in that the functional groups of the modifying particles are vinyl, allyl, acrylate or methacrylate groups, mixtures thereof and/or derivatives thereof. These functional groups turned out to be particularly suitable to react with at least one component of the coating composition, in particular with the unsaturated prepolymers, during the curing reaction, resulting in the highest improvement of the scratch and mar resistance of the coating.
In general, various unsaturated prepolymers may be used for the liquid radiation curable composition. Preferably, polyurethane, polyacrylate, polyether, polyester and/or silicone based unsaturated prepolymers are used. The unsaturations may be incorporated into the prepolymer either by an endcapping approach or by the selection of monomers in the backbone of the prepolymer. Preferably, the unsaturations are carbon-carbon double and/or triple bonds, in particular (meth)acrylate, vinyl, and/or allyl groups and derivatives and mixtures thereof. Acrylate functional groups are particularly preferred. The content of the unsaturated prepolymers within the composition is between 10 and 85 wt%, preferably between 15 and 60 w% and even more preferably between 20 and 45 wt%.The number average molecular mass (Mn) of said prepolymers is between 1000 and 60000 g/mol, preferably between and 1000 and 8000 g/mol, and more preferably between 1000 and 8000 g/mol. Due to the number average molecular mass (Mn) as stated above, the shrinkage of the coating composition will be reduced during curing. Furthermore, the viscosity of the coating composition is depending on the Mn of the said prepolymers and with the increase of Mn the viscosity of the composition also increases. Therefore, the flow properties of the coating composition will be deteriorated, in case Mn of said prepolymers exceeds 60000 g/mol. It turned out to be particularly advantageous to use prepolymers with a functionality of 4-15, preferably 5-10 and even more preferably 6-10. Prepolymers with a functionality of 4-15, preferably 5-10 and even more preferably 6-10 may provide a high crosslinking density to the coating and therefore a coating with high hardness and good mar- and abrasion resistance properties may be achieved. The use of prepolymers with a functionality of 4-15, preferably 5-10 and even more preferably 6-10 increases the crosslinking density in the cured coating layer and therefore, the mechanical and chemical properties of the coating may be highly improved. However, a certain degree of flexibility is still preserved, which is of high importance to avoid brittleness of the coating and to ensure sufficient impact resistance. The functionality of an unsaturated compound such as an unsaturated prepolymer is to be understood as the number of unsaturations that may be used for chemical cross-linking of the composition. Aliphatic prepolymers are used preferably.

According to a further particularly preferred embodiment of the invention the coating composition is characterised in that the unsaturated prepolymers are selected from the group consisting of acrylate and/or methacrylate and/or vinyl and/or allyl functionalized polyurethanes with a number average molecular mass (Mn) between 2000 and 60000 g/mol, preferably between 3000 and 20000 and more preferably between 3000 and 10000 g/mol.

According to a preferred embodiment, acrylic acrylate and/or urethane acrylate and/or silicone acrylate prepolymers are used, wherein preferably said prepolymers are aliphatic prepolymers and wherein preferably said prepolymers have a functionality of 4-15, preferably 5-10 and more preferably 6-10 and preferably a Mn between 1000 and 30000 g/mol, preferably 1000-10000 g/mol and more preferably 1000-8000 g/mol. Silicone acrylate prepolymers feature low surface energies and coating compositions comprising silicon acrylates typically exhibit lower surface energies, as compared to the identical composition without presence of silicon acrylate prepolymers. Low surface energies may lead to reduced wettability of the cured coating and thus a dirt repellent and/or anti-graffiti effect may be generated on the surface.
The backbone of the preferably used aliphatic prepolymers comprises CH2 groups and therefore, the so obtained cured coating layer has an inherent chemical stability against bases and acids. Additionally, these kinds of prepolymers exhibit high exterior durability. Additionally, the use of aliphatic prepolymers may improve the flexibility and the impact resistance of the cured coating and it also may reduce the shrinkage behaviour during the curing of the composition.
The content of acrylic acrylate prepolymers preferably is between 0 and 50 wt%, preferably between 0 and 30 wt%, more preferably between 0 and 20 wt%, even more preferably between 5 and 20 wt% and most preferably between 10 and 20 wt%. The content of urethane acrylate prepolymers is preferably between 5 and 50 wt%, more preferably between 10 and 40 wt%, even more preferably between 20 and 40 wt% and most preferably between 25 and 38 wt%. The content of silicone acrylate prepolymers is preferably between 0 and 5 wt%, more preferably between 0 and 4 wt% and most preferably between 1 and 3 wt%.

Commercially available, non-limiting examples of suitable, unsaturated prepolymers are Miramer PU2104 (Miwon), PU340 (Miwon), Ebecryl 244 (Allnex), Ebecryl 4101 (Allnex), Ebecryl 4858 (Allnex), PU340 (Miwon), Ebecryl 244 (Allnex), Ebecryl 4101 (Allnex), Miramer PU620 NT, Miramer MU9800NT (Miwon), Ebecryl 5129 (Allnex), Ebecryl 1291 (Allnex) Miramer S5242 (Miwon), Miramer PS460 (Miwon), CN203 (Sartomer), CN2208 (Sartomer), Ebecryl 884 (Allnex), Ebecryl 154 (Allnex).

According to a further particularly preferred embodiment of the invention the coating composition hardens to a transparent coating layer. This is particularly desirable, in case a decorative coating layer has been applied below in order to ensure the visibility of said decorative coating layer below. A transparent coating layer may be achieved by avoiding the addition of opaque pigments, such as titanium dioxide based pigments. However, dyes or non-opaque fillers may still be present in an essentially transparently curing coating formulation.
Preferably, the modifying particles have a mean particle size d(50) between 30 and 300 µm, more preferably between 30 and 200 µm, even more preferably between 40 and 150 µm, yet more preferably between 60 and 130 µm and most preferably between 75 and 120 µm.

According to a further particularly preferred embodiment of the invention the coating composition is characterised in that the modifying particles are embedded into the matrix and less than 1/3 of the modifying particles protrude from the final surface. The above mentioned mean particle sizes are preferably chosen because of the anchoring of such particles within the matrix. Depending on the final thickness of the applied coating, normally in the range of 30-200 µm, preferably 30-100 µm and more preferably 50-90 µm, most of all particles are largely embedded into the matrix and only less than approximately 1/3 of the particles protrude significantly from the final surface. On the other hand, particles with a d(50) smaller than 30 µm, lead to undesired agglomerates and stacking. These undesired effects caused by small modifying particles may cause poor embedding of said particles into the matrix, resulting in poor mechanical properties. Exemplary, an agglomerate of such small particles that is located at the surface of the coating may easily break off under mechanical stress. Additionally, particles with a d(50) smaller than 30 µm have a higher specific surface area, which, in case functional modifying particles are used, exhibits more functional groups on the surface that could react with the matrix. Although, the higher content of the functional groups on the surface will provide higher crosslinking density and improve the mechanical properties, it may also lead to higher internal stress of the coating layer and the impact resistance of the coating may be reduced. Furthermore, particles with a mean particles size d(50) below 30 µm have a higher volume rate in the coating layer as compared to particles with a mean particle size d(50) above 30 µm. Due to the higher volume rate, the particles may absorb higher amounts of radiation, in particular UV-radiation, during curing, which may have a negative effect to the curing of the coating composition. The polymer matrix may not be fully cured and the chemical, mechanical and physical properties of the cured coating layer may be significantly decreased. Another disadvantage of modifying particles with a d(50) smaller than 30 µm may be their higher ability of agglomeration than modifying particles with da d(50) larger than 30 µm. The modifying particles in the agglomerate typically do not significantly crosslink with each other and also the crosslinking between the modifying particle agglomerates and the polymer matrix may be highly reduced. Therefore, the mechanical resistance and the hardness of the coating may be reduced.
In addition to the modifying particles, soft modifying particles may also be added to the composition. These soft modifying particles have a Mohs hardness of below 5, preferably below 4 and are typically polymeric particles and are preferable chosen from polyesters, polyamides and polyurethanes. These soft modifying particles may have a spherical like shape, but also irregular, even acicular or plate-like or rod-like shapes are possible. The addition of such soft modifying particles may increase the flexibility and impact resistance of the coating and also an improved matting effect may be achieved.

Another objective of the invention is to provide an improved coating method using the coating composition described above.

The coating method comprising the steps of:
i. providing a substrate, in particular a construction material;
ii. applying a first layer of a first liquid coating composition onto said substrate;
iii. optionally applying a second layer of a second coating composition onto the first layer, preferably a decorative coating layer, more preferably a print, even more preferably a digital print and most preferably an inkjet or electro photographic-print;
iv. optionally applying a third layer of a third liquid, radiation curable coating composition onto the first or second layer;
v. applying a fourth layer, the fourth layer being a coating composition as described above.

A preferred embodiment of the present invention is as follows:
i. providing a substrate,
ii.applying a first layer of a first liquid coating composition onto said substrate,
iii. treating the coating with energy,
iv.optionally applying a second layer of a second coating composition, preferably a decorative coating layer, more preferably a print, even more preferably a digital print and most preferably an inkjet or electro photographic-print,
v. treating the coating with energy in case the second optional layer has been applied,
vi.optionally applying a third layer of a third liquid, radiation curable coating composition,
vii. treating the coating with energy in case the third optional layer has been applied,
viii. applying a fourth layer of a fourth liquid, radiation curable coating composition, the fourth layer being a coating composition as described above. ix.treating the coating with energy.

A particularly preferred embodiment of the present invention is as follows:
i. providing a substrate,
ii. applying a first layer of a first liquid, radiation curable coating composition onto said substrate,
iii. treating the coating with energy to partially cure the coating,
iv. optionally applying a second layer of a second, radiation curable coating composition, preferably a decorative coating layer, more preferably a print, even more preferably a digital print and most preferably an inkjet or electro photographic-print,
v. treating the coating with energy in case the second optional layer has been applied to partially cure the coating,
vi. optionally applying a third layer of a third liquid, radiation curable coating composition,
vii. treating the coating with energy in case the third optional layer has been applied to partially cure the coating,
viii. applying a fourth layer of a fourth liquid, radiation curable coating composition,
ix. treating the coating with energy to fully cure the coating.

It is particularly advantageous if a previous coating layer is only partially cured before the next coating layer is applied because the previous coating layer still has sufficient functional groups left that can react with the next coating layer and therefore the interlayer adhesion may be significantly improved. Additionally the partial curing of the previous coating layer may transfer the very same coating layer into a gel-like state and therefore the handling of the substrate and the following application of the next coating layer may be significantly facilitated.

### Curing

The term curing or cure as used within this application is to be understood as the treatment of a coating composition with energy, such as radiation or heat energy and thereby induce chemical reactions to form covalent bonds, resulting in the chemical crosslinking of the curable components to a chemical network. Non curable components that are present in such curable compositions are intercalated in said chemical network. The term partial curing as used within this application is to be understood as an incomplete curing reaction, leaving a certain amount (e.g.: at least 10%) of functional groups unreacted, which may be fully cured by subsequent energy treatment.

The term full curing or fully cure as used within this application is to be understood as a complete curing reaction, leaving a low amount of functional groups unreacted (at least 90%, preferably at least 95% and more preferably at least 98% of the functional groups have reacted).

Non-curable compositions may also be employed as the first and/or second coating layer. Of course, non-curable compositions may also be treated with energy, in particular radiation or heat energy in order to remove solvent and/or to sinter/fuse the compositions. However, chemical reactions to form covalent bonds are not induced by this treatment to a significant extent.

In case curable coating compositions are used, which may be the case for the first and/or second coating layer and which is always the case for the third and fourth coating layer, the curing can be generally performed layer by layer or at once after all layers have been applied or even both of these methods may be combined. Partial curing of a layer may be performed before the next coating layer is applied followed by full curing of both layers or followed again by partial curing of the second layer before the very next layer is applied. When all coating layers have been applied, the coating is fully cured. Whether a coating is fully or only partially cured can be determined by adjusting the energy input and the time of the energy treatment. It is a standard experimental procedure for a person skilled in the art to properly adjust the curing conditions in order to obtain a desired curing state of a coating.

### Preferred embodiments of the first composition for the first layer of the coating method as described above:

Surprisingly it was found, that radiation curable compositions show significant advantages as compared to non-curable compositions. Typically, said radiation curable compositions comprise unsaturated prepolymers and/or oligomers (within the present application, the terms "oligomer", "polymer", "resin" and "prepolymer" are used synonymously) that are capable to react and crosslink with each other in a radical mechanism which may be triggered by photo initiators, which may also be present in the composition, thereby forming a cross-linked network. However, the crosslinking reaction may also be induced by high energy radiation or electron beams without any photo initiators.

According to a further particularly preferred embodiment of the invention the first coating composition is characterised in that the first coating composition comprises pigments, preferably color pigments and even more preferably white pigments. Within this application, black and white are considered as color. Thus, black and white pigments are to be understood as color pigments.

According to a preferred embodiment, the first coating composition comprises pigments and/or dyes. Both organic and inorganic pigments may be used, but inorganic pigments are preferred. Preferably, the first coating composition provides for an opaque appearance of the first coating layer after curing. It is particularly preferred to use white pigments, in particular inorganic white pigments and further in particular titanium dioxide based pigments, to obtain an opaque first coating layer after curing. Obtaining a first coating layer with an opaque appearance after curing is particularly desirable, in case a second, decorative coating layer is applied. The opaque first coating layer may ensure good visibility and high contrast of the second, decorative layer.

According to a further preferred embodiment, the composition is formulated such that an essentially transparent first coating layer is obtained after curing. A transparent coating layer may be achieved by avoiding the addition of opaque pigments, such as titanium dioxide based pigments. However, dyes or non-opaque fillers may still be present in an essentially transparently curing coating formulation.

The viscosity of the first coating composition is between 10 - 5000 mPas, preferably 100 - 3000 mPas, more preferably 100 - 1500 mPas, even more preferably 300 - 1000 mPas at 25 °C before curing. The viscosity is depending on the molecular weight of the used prepolymers in the coating composition. Compositions with a viscosity below 10 mPas at 25 °C increase the crosslinking density after the curing. This leads to a higher internal stress in the coating and higher shrinkage upon curing and thus the impact resistance of the cured coating may be decreased. Furthermore, the mechanical anchoring of the coating system to the substrate will be reduced due to the higher shrinkage of a coating composition with a viscosity below 10 mPas at 25 °C. The application of a coating composition with a viscosity above 5000 mPas at 25 °C onto the substrate surface requires additional heating to decrease the application viscosity. This additional heat could cause pre-reactions, accelerated curing, non-intended increase of viscosity and decrease of the recyclability of the coating composition.

Preferably, polyurethane, polyacrylate, polyether, polyester and/or silicone based unsaturated prepolymers are used. The unsaturations may be incorporated into the prepolymer either by an endcapping approach or by the selection of monomers in the backbone of the prepolymer. Preferably, the unsaturations are carbon-carbon double and/or triple bonds, in particular acrylate, vinyl, and/or allyl groups and derivatives and mixtures thereof. Acrylate functional groups are particularly preferred.

According to a preferred embodiment, polyurethane acrylates and/or acrylic acrylates are employed. The content of the unsaturated prepolymers within the first coating composition is between 10 and 85 wt%, preferably between 15 and 60 w% and even more preferably between 20 and 45 wt%. Aliphatic prepolymers are used preferably.

The number average molecular mass (Mn) of said prepolymers is between 1000 and 30000 g/mol, preferably between 1000 and 10000 g/mol, and more preferably between 1000 and 8000 g/mol. It turned out to be particularly advantageous to use prepolymers with a functionality of 1-4, preferably 1-3 and even more preferably 1-2. It was found, that prepolymers with a functionality of 1-4, preferably 1-3 and even more preferably 1-2 are provided for high flexibility of the cured coating layer and also improve the adhesion to the substrate as well as to the next layer (s) . The adhesion between the coating layer and the substrate may be generated by van der Waals interactions, hydrogen bond interactions and mechanical anchoring of the polymer matrix to the substrate surface. The mechanical anchoring is usually regarded as the most important adhesion type between UV curable coatings and substrate surfaces. However, due to the shrinkage behaviour upon curing of UV curable coating compositions, the mechanical anchoring is getting significantly reduced. Shrinkage of the coating composition upon curing is highly decreased by use of unsaturated prepolymers with a functionality of 1-4, and thus the mechanical anchoring of the UV curable coating composition upon curing may be significantly improved.

According to a preferred embodiment, acrylic acrylate and/or urethane acrylate prepolymers are used, wherein preferably said prepolymers are aliphatic prepolymers and wherein preferably said prepolymers have a functionality of 1-4, preferably 1-3 and more preferably 1-2 and preferably a Mn between 1000 and 30000 g/mol, preferably 1000 - 10000 g/mol and more preferably 1000 - 8000 g/mol. The backbone of the used aliphatic prepolymers comprises CH2 groups and therefore, the cured coating layer has an inherent chemical stability against bases and acids. Additionally, this kind of prepolymers exhibit high exterior durability. The content of acrylic acrylate prepolymers is preferably between 0 and 50 wt%, preferably between 0 and 30 wt%, more preferably between 0 and 20 wt%, even more preferably between 5 and 20 wt% and most preferably between 10 and 20 wt%. The content of urethane acrylate prepolymers is preferably between 5 and 35 wt%, more preferably between 5 and 30 wt%, even more preferably between 10 and 25 wt% and most preferably between 15 and 25 wt%. Commercially available, non-limiting examples of suitable, unsaturated prepolymers are Miramer PU2104 (Miwon), PU340 (Miwon), Ebecryl 244 (Allnex), Ebecryl 4101 (Allnex), Ebecryl 4858 (Allnex) .

Preferably, acrylate functional reactive diluents with a functionality of 1-3 are used for the first coating composition. The content of reactive diluents is preferably between 0 and 70 wt%, more preferably between 0 and 60 wt%, even more preferably between 10 and 60% and most preferably between 30 and 55 wt%. Commercially available, non-limiting, examples of suitable reactive diluents are monofunctional acrylates like isobornylacrylate (IBOA) (Allnex), cyclic trimethylolpropane formal acrylate SR531 (Sartomer) lauryl acrylate SR335 (Sartomer), tridecyl acrylate Miramer M124 (Miwon), difunctional acrylates like hexanediol diacrylate (HDDA), dipropylene glycol acrylate, esterdiol diacrylate (EDDA) SR606A (Sartomer), tricyclodecanedimethanol diacrylate (TCDDMDA) SR833S (Sartomer), tricyclodecanediol diacrylate Ebecryl 130 (Allnex), triethylene glycol diacrylate (TEGDA) Miramer M220 (Miwon), trifunctional acrylates like trimethylolpropane triacrylate (TMPTA) Miramer M300 (Miwon), trimethylolpropane triacrylate(TMPTA) TMP(EO)6TA M3160 (Miwon), Laromer® LR 8863 (BASF), tris (2-hydroxy ethyl) isocyanurate triacrylate (THEICTA) SR368 (Sartomer).

According to a preferred embodiment, the reactive diluent comprises lauryl acrylate for the first coating composition. The addition of lauryl acrylate may impose a hydrophobic nature to the coating, resulting in improved water resistance of the cured coating due to the aliphatic, non-polar chain of lauryl acrylate.

According to a particularly preferred embodiment, the reactive diluent comprises lauryl acrylate, IBOA, HDDA and/or TMPTA and any possible combination thereof. Surprisingly, it was found that said mixtures result in improved rheological properties of the coating composition as well as high water resistance of the cured coating.

### Preferred embodiments of the second composition for the second layer of the coating method as described above:

Within the present application a decorative coating is to be understood as a non-uniform coating layer. Such a non-uniform coating layer may represent an image, a character or a lettering, a decorative pattern, a QR-code and the like. The requirements for the optional second coating layer are good water resistance and good adhesion to the first coating layer as well as to the third coating layer. Additionally, good weatherability and light fastness is of high importance in order to provide a long lasting and brilliant decorative coating, in particular for exterior applications. Therefore, the second composition needs to be formulated in order to achieve the above mentioned properties. Said non-uniform coating layer may be applied as a print. In that sense said non-uniform coating layer may comprise different second coating compositions, e.g.: ink and/or toner compositions with different color such as cyan (C), magenta (M), yellow (Y) and black (K), so called CMYK color. However, other color, such as white, red, orange may also be used.

Both analogous and digital printing methods may be used to apply the second layer.

According to a preferred embodiment, digital printing methods are particularly preferred due to the higher flexibility in case the desired printing pattern is changed. Among the digital printing methods, electro photographic and inkjet printing is preferably used, wherein both direct and indirect printing (e.g.: use of a transfer foil) is possible.

According to a preferred embodiment, radiation curable, in particular UV/LED/EB curable inkjet inks, preferably as disclosed in WO2016016112 are used as second coating composition.

### Preferred embodiments of the third composition for the third layer of the coating method as described above:

For horizontal applications (e.g. flooring), the third coating layer is typically used as good flexibility and impact resistance is required; however, for vertical applications (e.g. walls) the third coating layer is optional and may be omitted.

As third coating composition according to the present invention a liquid, radiation curable coating composition is employed. The third coating layer, which is formed from said third coating composition acts as the link between the first coating layer and/or the second layer (if present) with the fourth coating layer. Therefore, the adhesion of the third coating layer to the first and/or second coating layer and to the fourth coating layer is of great importance. It is essential that the third coating layer (if present) features sufficient flexibility in order to provide the entire coating with a decent degree of flexibility. Additionally, the third layer needs to be sufficiently tough and hard in order to be used for the coating of construction material. In order to achieve the above mentioned properties, a liquid, radiation curable coating composition is used. UV/LED/EB curable compositions are used preferably. Typically, said radiation curable compositions comprise unsaturated oligomers and/or prepolymers that are capable to react and crosslink with each other in a radical mechanism which may be triggered by photo initiators, which may also be present in the composition, thereby forming a cross-linked network. However, the crosslinking reaction may also be induced by high energy radiation or electron beams without any photo initiators. Additionally to said unsaturated prepolymers, the compositions may comprise diluents, in particular reactive diluents, pigments, fillers, and additives such as light and/or heat stabilizers, antioxidants, surface modifying agents, defoaming agents surfactants, catalysts, synergists and further additives as known in the art.

According to a preferred embodiment, the third coating composition is formulated such that an essentially transparent third coating layer is obtained after curing. This is particularly desirable, in case a second, decorative coating layer has been applied in order to ensure the visibility of said second, decorative coating layer. A transparent coating layer may be achieved by avoiding the addition of opaque pigments, such as titanium dioxide based pigments. However, dyes or non-opaque fillers may still be present in an essentially transparently curing coating formulation.

In general, various unsaturated prepolymers may be used for the third, liquid radiation curable composition. Preferably, polyurethane, polyacrylate, polyether, polyester and/or silicone based unsaturated prepolymers are used. The unsaturations may be incorporated into the prepolymer either by an endcapping approach or by the selection of monomers in the backbone of the prepolymer. Preferably, the unsaturations are carbon-carbon double and/or triple bonds, in particular acrylate, vinyl, and/or allyl groups and derivatives and mixtures thereof. Acrylate functional groups are particularly preferred.

According to a preferred embodiment, polyurethane acrylates and/or acrylic acrylates are employed. The content of the unsaturated prepolymers within the third coating composition is between 10 and 85 wt%, preferably between 20 and 65 wt% and even more preferably between 30 and 55 wt%. Aliphatic prepolymers are used preferably. The number average molecular mass (Mn) of said prepolymers is between 1000 and 30000 g/mol, preferably between 1000 and 10000 g/mol, and more preferably between 1000 and 8000 g/mol. It turned out to be particularly advantageous to use prepolymers with a functionality of 1-6, preferably 1-3 and even more preferably 2-3. It was found by the applicant that prepolymers with a functionality of 1-6, preferably 1-3 and even more preferably 2-3 are provided for high flexibility of the cured coating layer and also improve the adhesion to the previous layer(s) as well as to the next layer. The adhesion between the coating layers may be generated by van der Waals interactions, hydrogen bond interactions and mechanical anchoring of the polymer matrix to the previous layer. The mechanical anchoring is usually regarded as the most important adhesion type between UV curable coatings layers. However, due to the shrinkage behaviour upon curing of UV curable coating compositions, the mechanical anchoring is getting significantly reduced. Shrinkage of the coating composition upon curing is highly decreased by use of unsaturated prepolymers with a functionality of 1-6, and thus the mechanical anchoring of the UV curable coating composition upon curing may be significantly improved.

According to a preferred embodiment, acrylic acrylates and/or urethane acrylate based prepolymers are used, wherein preferably said prepolymers are aliphatic prepolymers and wherein preferably said prepolymers have a functionality of 1-6, more preferably 1-3, and even more preferably 2-3 and preferably a Mn between 1000 and 30000 g/mol, preferably 1000 - 10000 g/mol and more preferably 1000 - 5000 g/mol. The backbone of the used aliphatic prepolymers comprises CH2 groups and therefore, the cured coating layer has an inherent chemical stability against bases and acids. Additionally, this kind of prepolymers exhibit high exterior durability. The content of acrylic acrylate prepolymers is preferably between 0 and 50 wt%, preferably between 0 and 30 wt% and more preferably between 0 and 20 wt%. The content of urethane acrylate prepolymers is preferably between 10 and 70 wt%, more preferably between 30 and 60 wt%, even more preferably between 40 and 60 wt% and most preferably between 45 and 55 wt%. Commercially available, non-limiting examples of suitable, unsaturated prepolymers are PU340 (Miwon), Ebecryl 244 (Allnex), Ebecryl 4101 (Allnex), Miramer PU620 NT (Miwon), Miramer MU9800NT (Miwon), Ebecryl 5129 (Allnex), Ebecryl 1291 (Allnex), Miramer S5242 (Miwon), Miramer PS460 (Miwon), CN203 (Sartomer), CN2208, Ebecryl 884 (Allnex), Ebecryl 154 (Allnex).

Reactive diluents may be added to the composition in order to adjust the rheological properties, such as the viscosity, of the composition. Additionally, the network density may be influenced by addition of these compounds. Often, a mixture of various reactive diluents may be useful to adjust the properties as desired. Reactive diluents are typically regarded as low molecular weight compounds, solvents, monomers or short oligomers with at least one functional group that is capable of reacting with at least one other component of the composition. Preferably, acrylate functional reactive diluents with a functionality of 1-3 are used for the third coating composition. Commercially available, non-limiting, examples of suitable reactive diluents are monofunctional acrylates like isobornylacrylate (IBOA) (Allnex), cyclic trimethylolpropane formal acrylate SR531 (Sartomer) lauryl acrylate SR335 (Sartomer), tridecyl acrylate Miramer M124 (Miwon), difunctional acrylates like hexanediol diacrylate (HDDA), dipropylene glycol acrylate, esterdiol diacrylate (EDDA) SR606A (Sartomer), tricyclodecanedimethanol diacrylate (TCDDMDA) SR833S (Sartomer), tricyclodecanediol diacrylate Ebecryl 130 (Allnex), triethylene glycol diacrylate (TEGDA) Miramer M220 (Miwon), trifunctional acrylates like trimethylolpropane triacrylate (TMPTA) Miramer M300 (Miwon), trimethylolpropane triacrylate TMP(EO)6TA M3160 (Miwon), Laromer® LR 8863 (BASF), tris (2-hydroxy ethyl) isocyanurate triacrylate (THEICTA) SR368 (Sartomer).

According to a preferred embodiment, the reactive diluent consists essentially of difunctional acrylate functional compounds, in particular HDDA, because the flexibility of the coating layer may be significantly improved.

### Test methods

[Mohs hardness] The Mohs hardness of the used materials may be determined by using a standard, commercially available Mohs hardness testing kit.

[Particle size distribution (PSD)] The PSD, in particular d(10), d(50), and d(90) values, of the particles are determined by using a Scirocco 2000 machine commercially available from Malvern Instruments GmbH employing a laser diffraction method. Within the present application the d(50) value is defined as mean particle size, the d(10) value is defined as minimum particle size and the d(90) value is defined as maximum particle size.

[viscosity] The viscosity is determined using a rotational viscometer (Brookfield DV-II+Pro or Broofield CAP 2000+) and the plate-plate method at a rotation speed of 300 rpm at a defined temperature.

[Number average molecular mass (Mn)]: The number average molar mass is determined by gel permeation chromatography. As an eluent, chloroform was used, at a flow rate of 1 ml/min. Calibration of the separation columns (three columns of 8 mm χ 300 mm each, PSS SDV, 5 pm, 100, 1000 and 100000 A) was done by narrowly distributed polystyrene standards, and detection via refractive index detector

[sphericity] The sphericity is a measure how closely the shape of a particle resembles the shape of s sphere. Generally, the sphericity (S) of a particle is defined as the ratio of a surface area (As) of a sphere of the same volume as the particle over the surface area of the particle (Ap). Hence S = As/Ap. However, as the surface area of the particle may be difficult to measure, in particular for a plurality of particles, sophisticated methods have been developed which are implemented in commercially available apparatuses, as for example Sysmex FPIA-3000, available from Malvern Instruments GmbH, Germany, www.malvern.com.

### Examples

The following examples are supposed to further illustrate the invention as described within this application without any intention to limit the scope of the invention.

The specified amounts of compounds (given in %) used for a specific coating composition are given as wt% with respect to the total weight of the coating composition, unless otherwise noted. % and wt% are used synonymously within the present application.

**First Coating Composition**

| **#** | **Raw material** | **Supplier** | **Short description** | **Quantity (wt %)** |
|---|---|---|---|---|
| **1** | Miramer M300 | Miwon | [unsaturated prepolymer] - trifunctional acrylic acrylate | 6.4 |
| **2** | Miramer S5242 | Miwon | [unsaturated prepolymer] -difunctional acrylic acrylate prepolymer Mn ∼ 13 000 g/mol | 13.7 |
| **3** | Miramer PU2100NT | Miwon | [unsaturated prepolymer] - difunctional aliphatic urethane acrylate, Mn ∼ 2500 g/mol | 22.5 |
| **4** | Miramer M1140 | Miwon | [reactive diluent] - IBOA | 9.5 |
| **5** | Sartomer SR335 | Sartomer | [reactive diluent] - LA | 13.5 |
| **6** | Ebecryl Hexandioldiacrylate | Allnex | [reactive diluent] - HDDA | 24.0 |
| **7** | Omnirad 1173 | IGM Resins | photoinitiator | 3.2 |
| **8** | Omnirad 819 | IGM Resins | photoinitiator | 3.3 |
| **9** | Byk UV 3576 | Altana | curable surfactant | 0.5 |
| **10** | Efka SI 2723 | BASF | defoaming agent | 0.6 |
| **11** | Tinuvin 292 | BASF | hindered amine light stabilizer (HALS) | 1.8 |
| **12** | Tinuvin 400 | BASF | UV absorber | 1.0 |
| | | | | 100 |

**Third Coating Composition**

| **#** | **Raw material** | **Supplier** | Short **description** | **Quantity (wt %)** |
|---|---|---|---|---|
| **1** | Miramer PU3440NT | Miwon | [unsaturated prepolymer] - tetrafunctional, aliphatic urethane acrylate, Mn ∼ 3700 g/mol | 38.0 |
| **2** | Ebecryl 8402 | Allnex | [unsaturated prepolymer] - difunctional aliphatic urethane acrylate, Mn ∼ 1500 g/mol | 22.5 |
| **3** | Ebecryl Hexandioldiacrylate | Allnex | [reactive diluent] - HDDA | 28.7 |
| **4** | Acematt OK 412 | Evonik | silica based filler | 5.0 |
| **5** | Omnirad 1173 | IGM Resins | photoinitiator | 2.0 |
| **6** | Omnirad 819 | IGM Resins | photoinitiator | 0.5 |
| **7** | Byk UV 3576 | Altana | curable surfactant | 0.5 |
| **8** | Efka SI 2723 | BASF | Defoaming agent | 0.6 |
| **9** | Tinuvin 292 | BASF | hindered amine light stabilizer (HALS) | 1.2 |
| **10** | Tinuvin 400 | BASF | UV absorber | 1.0 |
| | | | | 100 |

**Fourth Coating Composition (comparative) A**

| **#** | **Raw material** | **Supplier** | **Short description** | **Quantity (wt %)** |
|---|---|---|---|---|
| **1** | Miramer PU3440NT | Miwon | [unsaturated prepolymer] - tetrafunctional aliphatic urethane acrylate, Mn ∼ 3700 g/mol | 18.4 |
| **2** | Ebecryl 5129 | Allnex | [unsaturated prepolymer] - hexafunctional aliphatic urethane acrylate, Mn ∼ 1000 g/mol | 10.5 |
| **3** | Miramer PU9800NT | Miwon | [unsaturated prepolymer] - nonafunctional aliphatic urethane acrylate, Mn ∼ 4000 g/mol | 16.6 |
| **4** | Miramer SIU2400 | Miwon | [unsaturated prepolymer] - decafuncitional silicone urethane acrylate, Mn ∼ 8000 g/mol | 4.5 |
| **5** | SR355 | Sartomer | [reactive diluent] - tetrafunctional acrylic acrylate - DiTMPTTA | 7.9 |
| **6** | Miramer M200 | Miwon | [reactive diluent] - HDDA | 15.0 |
| **7** | SR833S | Sartomer | [reactive diluent] - TCDDA | 7.8 |
| **8** | Acematt 3600 | Evonik | Silica based filler | 10.0 |
| **9** | Omnirad 1173 | IGM Resins | photoinitiator | 3.2 |
| **10** | Omnirad 819 | IGM Resins | photoinitiator | 2.5 |
| **11** | Byk UV 3535 | Altana | Curable surfactant | 0.8 |
| **12** | Efka SI 2723 | BASF | defoaming agent | 0.6 |
| **13** | Tinuvin 292 | BASF | hindered amine light stabilizer (HALS) | 1.2 |
| **14** | Tinuvin 400 | BASF | UV absorber | 1.0 |
| | | | | 100 |

**Fourth Coating Composition with modifying particles (polyurethane) (comparative) B**

| **#** | **Raw material** | **Supplier** | Short **description** | **Quantity (wt %)** |
|---|---|---|---|---|
| **1** | Miramer PU3440NT | Miwon | [unsaturated prepolymer] - tetrafunctional aliphatic urethane acrylate, Mn ∼ 3700 g/mol | 15.7 |
| **2** | Ebecryl 5129 | Allnex | [unsaturated prepolymer] - hexafunctional aliphatic urethane acrylate, Mn ∼ 1000 g/mol | 10.5 |
| **3** | Miramer PU9800NT | Miwon | [unsaturated prepolymer] - nonafunctional aliphatic urethane acrylate, Mn ∼ 4000 g/mol | 13.3 |
| **4** | Miramer SIU2400 | Miwon | [unsaturated prepolymer] - decafuncitional silicone urethane acrylate, Mn ∼ 8000 g/mol | 4.5 |
| **5** | SR355 | Sartomer | [reactive diluent] - tetrafunctional acrylic acrylate - DiTMPTTA | 7.9 |
| **6** | Miramer M200 | Miwon | [reactive diluent] - HDDA | 20.0 |
| **7** | SR833S | Sartomer | [reactive diluent] - TCDDA | 7.8 |
| **8** | Acematt 3600 | Evonik | silica based filler | 5.0 |
| **9** | HOSBead U 90 TR | HOS-Technik | [modifying particle] - polyurethane based, particles size = d(50) = 60-90 µm, Mohs hardness < 5 | 6.0 |
| **10** | Omnirad 1173 | IGM Resins | photoinitiator | 3.2 |
| **11** | Omnirad 819 | IGM Resins | photoinitiator | 2.5 |
| **12** | Byk UV 3535 | Altana | curable surfactant | 0.8 |
| **13** | Efka SI 2723 | BASF | defoaming agent | 0.6 |
| **14** | Tinuvin 292 | BASF | hindered amine light stabilizer (HALS) | 1.2 |
| **15** | Tinuvin 400 | BASF | UV absorber | 1.0 |
| | | | | 100 |

**Fourth Coating Composition with modifying particles (combination glass beads with high and medium particle size) C**

| **#** | **Raw material** | **Supplier** | **Short description** | **Quantity (wt %)** |
|---|---|---|---|---|
| **1** | Miramer PU3440NT | Miwon | [unsaturated prepolymer] - tetrafunctional aliphatic urethane acrylate, Mn ∼ 3700 g/mol | 15.7 |
| **2** | Ebecryl 5129 | Allnex | [unsaturated prepolymer] - hexafunctional aliphatic urethane acrylate, Mn ∼ 1000 g/mol | 10.5 |
| **3** | Miramer PU9800NT | Miwon | [unsaturated prepolymer] - nonafunctional aliphatic urethane acrylate, Mn ∼ 4000 g/mol | 13.3 |
| **4** | Miramer SIU2400 | Miwon | [unsaturated prepolymer] - decafuncitional silicone urethane acrylate, Mn ∼ 8000 g/mol | 4.5 |
| **5** | SR355 | Sartomer | [reactive diluent] - tetrafunctional acrylic acrylate - DiTMPTTA | 7.9 |
| **6** | Miramer M200 | Miwon | [reactive diluent] - HDDA | 20.0 |
| **7** | SR833S | Sartomer | [reactive diluent] - TCDDA | 7.8 |
| **8** | SiLibeads 5213 | Sigmund Lindner | [modifying particle] - glass beads, d(50) = 112 µm, Mohs hardness ≥ 6 | 6.0 |
| **9** | SiLibeads 5212 | Sigmund Lindner | [modifying particle] - glass beads, d(50) = 85 µm, Mohs hardness ≥ 6 | 6.0 |
| **10** | Omnirad 1173 | IGM Resins | photoinitiator | 3.6 |
| **11** | Omnirad 819 | IGM Resins | photoinitiator | 1.1 |
| **12** | Byk UV 3535 | Altana | curable surfactant | 0.8 |
| **13** | Efka SI 2723 | BASF | defoaming agent | 0.6 |
| **14** | Tinuvin 292 | BASF | hindered amine light stabilizer (HALS) | 1.2 |
| **15** | Tinuvin 400 | BASF | UV absorber | 1.0 |
| | | | | 100 |

**Fourth Coating Composition with modifying particles (combination glass beads with high and small particle size) D**

| **#** | **Raw material** | **Supplier** | **Short description** | **Quantity (wt %)** |
|---|---|---|---|---|
| **1** | Miramer PU3440NT | Miwon | [unsaturated prepolymer] - tetrafunctional aliphatic urethane acrylate, Mn ∼ 3700 g/mol | 15.7 |
| **2** | Ebecryl 5129 | Allnex | [unsaturated prepolymer] - hexafunctional aliphatic urethane acrylate, Mn ∼ 1000 g/mol | 10.5 |
| **3** | Miramer PU9800NT | Miwon | [unsaturated prepolymer] - nonafunctional aliphatic urethane acrylate, Mn ∼ 4000 g/mol | 13.3 |
| **4** | Miramer SIU2400 | Miwon | [unsaturated prepolymer] - decafuncitional silicone urethane acrylate, Mn ∼ 8000 g/mol | 4.5 |
| **5** | SR355 | Sartomer | [reactive diluent ] - tetrafunctional acrylic acrylate - DiTMPTTA | 7.9 |
| **6** | Miramer M200 | Miwon | [reactive diluent] - HDDA | 20.0 |
| **7** | SR833S | Sartomer | [reactive diluent] - TCDDA | 7.8 |
| **8** | SiLibeads 5213 | Sigmund Lindner | [modifying particle] - glass beads, d(50) = 112 µm, Mohs hardness ≥ 6 | 6.0 |
| **9** | SiLibeads 5210 | Sigmund Lindner | [modifying particle] - glass beads, d(50) = 32 µm, Mohs hardness ≥ 6 | 5.0 |
| **10** | Omnirad 1173 | IGM Resins | photoinitiator | 3.6 |
| **11** | Omnirad 819 | IGM Resins | photoinitiator | 2.1 |
| **12** | Byk UV 3535 | Altana | curable surfactant | 0.8 |
| **13** | Efka SI 2723 | BASF | defoaming agent | 0.6 |
| **14** | Tinuvin 292 | BASF | hindered amine light stabilizer (HALS) | 1.2 |
| **15** | Tinuvin 400 | BASF | UV absorber | 1.0 |
| | | | | 100 |

**Fourth Coating Composition with modifying particles (combination glass beads with small and high particle size modified with cross-linkable functional groups on the surface) E**

| **#** | **Raw material** | **Supplier** | **Short description** | **Quantity (wt %)** |
|---|---|---|---|---|
| **1** | Miramer PU3440NT | Miwon | [unsaturated prepolymer] - tetrafunctional aliphatic urethane acrylate, Mn ∼ 3700 g/mol | 15.7 |
| **2** | Ebecryl 5129 | Allnex | [unsaturated prepolymer] - hexafunctional aliphatic urethane acrylate, Mn ∼ 1000 g/mol | 10.5 |
| **3** | Miramer PU9800NT | Miwon | [unsaturated prepolymer] - nonafunctional aliphatic urethane acrylate, Mn ∼ 4000 g/mol | 13.3 |
| **4** | Miramer SIU2400 | Miwon | [unsaturated prepolymer] - decafuncitional silicone urethane acrylate, Mn ∼ 8000 g/mol | 4.5 |
| **5** | SR355 | Sartomer | [reactive diluent] - tetrafunctional acrylic acrylate - DiTMPTTA | 7.9 |
| **6** | Miramer M200 | Miwon | [reactive diluent] - HDDA | 20.0 |
| **7** | SR833S | Sartomer | [reactive diluent] - TCDDA | 7.8 |
| **8** | SiLibeads 5213 | Sigmund Lindner | [surface modifying particle] - glass beads, d(50) = 112 µm, Mohs hardness ≥ 6, surface modified with vinyl groups | 6.0 |
| **9** | SiLibeads 5210 | Sigmund Lindner | [surface modifying particle] - glass beads, d(50) = 32 µm, Mohs hardness ≥ 6, surface modified with vinyl groups | 5.0 |
| **10** | Omnirad 1173 | IGM Resins | photoinitiator | 3.6 |
| **11** | Omnirad 819 | IGM Resins | photoinitiator | 2.1 |
| **12** | Byk UV 3535 | Altana | curable surfactant | 0.8 |
| **13** | Efka SI 2723 | BASF | defoaming agent | 0.6 |
| **14** | Tinuvin 292 | BASF | hindered amine light stabilizer (HALS) | 1.2 |
| **15** | Tinuvin 400 | BASF | UV absorber | 1.0 |
| | | | | 100 |

Comparison of Scratch Resistance according to ISO1518-1:2011 and ISO1518-2:2011 with tungsten carbide tip (ISO Ø 1,0 mm) Substrate: Concrete slabs

| **Structure** | **Scratch Resistance [N]** |
|---|---|
| 4 Layer **E** 70 µm | > 20 |
| 3 Layer 50 µm | |
| 2 Layer (Print) 10 µm | |
| 1 Layer 50 µm | |
| 4 Layer **D** 70 µm | 16 |
| 3 Layer 50 µm | |
| 2 Layer (Print) 10 µm | |
| 1 Layer 50 µm | |
| 4 Layer **C** 70 µm | 12 |
| 3 Layer 50 µm | |
| 2 Layer (Print) 10 µm | |
| 1 Layer 50 µm | |
| 4 Layer **B** 70 µm | 10 |
| 3 Layer 50 µm | |
| 2 Layer (Print) 10 µm | |
| 1 Layer 50 µm | |
| 4 Layer **A** 70 µm | 9 |
| 3 Layer 50 µm | |
| 2 Layer (Print) 10 µm | |
| 1 Layer 50 µm | |
| 4 Layer **E** 70 µm | 16 |
| 2 Layer (Print) 10 µm | |
| 1 Layer 50 µm | |

Abrasion Resistance Tests according to ASTM D4060
Substrate: PVC plates 3 mm thick
Device: Taber Abraser Tester
Wheels: CS-0 rubber with S-33 Sandpaper Stripe
Weight: 1000 g

| **Structure** | **Weight of Loss 50 Cycles [mg]** |
|---|---|
| 4 Layer **E** 70 µm | 26,7 |
| 3 Layer 50 µm | |
| 1 Layer 50 µm | |
| 4 Layer **D** 70 µm | 32,3 |
| 3 Layer 50 µm | |
| 1 Layer 50 µm | |
| 4 Layer **B** 70 µm | 38,5 |
| 3 Layer 50 µm | |
| 1 Layer 50 µm | |

### Brief Description of the Drawings

Fig. 1 is a schematic view of a coating system including 3 layers.
Fig. 2 is a schematic view of a coating system including 4 layers.
Fig. 3 is a schematic view of a coating system including 3 layers as well as a fourth layer modified with glass beads of different size.
Fig. 4 is a schematic view of a coating system including 3 layers as well as a fourth layer modified with glass beads and PU beads of different size.

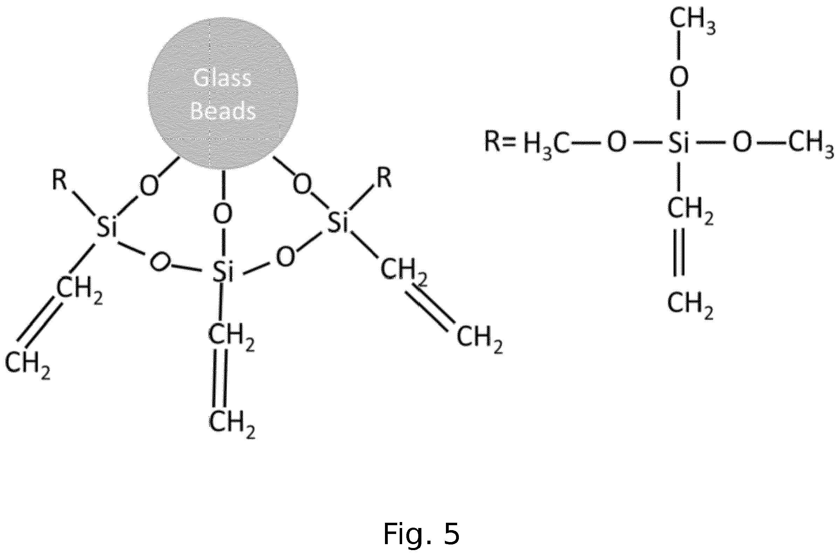

Fig. 5 shows the modification of glass beads with trimethoxyvinylsilane

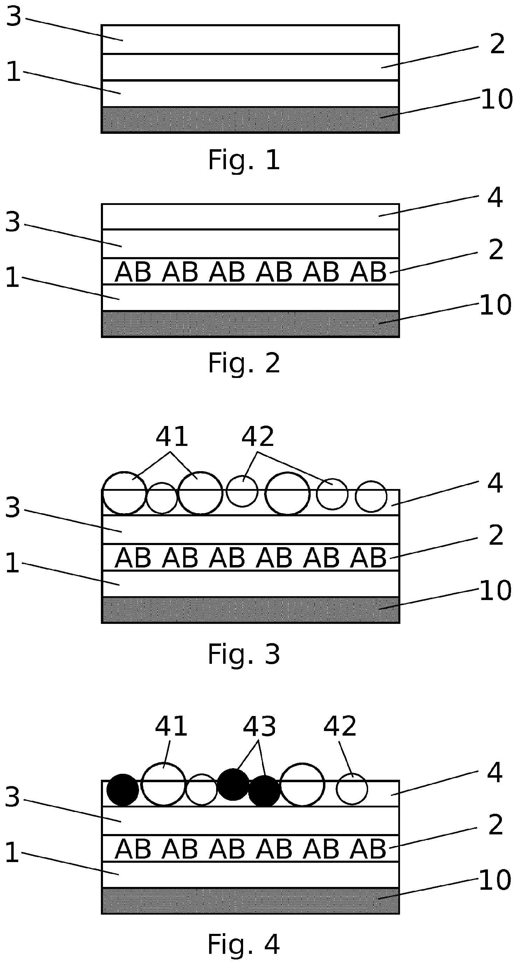

Fig. 1 shows a substrate 10, in particular a construction material on which a first layer 1 of a first liquid coating composition is applied, a second layer 2 of a second coating composition and a third layer 3 of a third coating composition are applied.
Fig. 2 shows a substrate 10, in particular a construction material on which as shown in Fig. 1 a first layer 1 of a first liquid coating composition, a second layer 2 of a second coating composition and a third layer 3 of a third coating composition are applied. The second layer 2 comprises a decorative print. Additionally, there is a fourth layer 4 being a coating composition according as described above applied onto the third layer 3.
Fig. 3 shows a substrate 10, in particular a construction material on which as shown in Fig. 2 a first layer 1 of a first liquid coating composition, a second layer 2 of a second coating composition, comprising a print on at least a part of the layer, a third layer 3 of a third coating composition and a fourth layer 4 being a coating composition according as described above are applied. The fourth layer 4 having embedded glass beads 41, 42 of different size, the bigger glass beads 41 having a size of about 90 - 150 µm and the smaller glass beads 42 having a size of about 70 - 110 µm.
Fig. 4 shows a substrate 10, in particular a construction material on which as shown in Fig. 3 a first layer 1 of a first liquid coating composition, a second layer 2 of a second coating composition, comprising a print on at least a part of the layer, a third layer 3 of a third coating composition and a fourth layer 4 being a coating composition according as described above, comprising embedded glass beads 41, 42 of different size and additional PU beads 43 of a size about 90 µm, are applied.

## Claims

1. A radiation curable coating composition comprising unsaturated prepolymers in an amount of between 10 and 85 wt%, preferably between 15 and 60 wt% and even more preferably between 20 and 45 wt% of the total composition for building up a coating matrix, **characterised in that** the composition comprises furthermore modifying particles having a Mohs hardness of at least 5, preferably at least 6, and a mean particle size d(50) between 30 and 200 µm, preferably between 40 and 150 µm, more preferably between 60 and 130 µm and most preferably between 75 and 120 µm.

2. Coating composition according to claim 1, **characterised in that** the modifying particles are selected from the group consisting of glass particles, polyurethane particles, aluminum oxide, preferably corundum, particles, (meth)acrylate particles and polyolefin, preferably polypropylene, particles, preferably filled glass particles.

3. Coating composition according to any of the preceding claims, **characterised in that** it comprises at least first and second modifying particles, wherein the difference of the maximum particle size d(90) of the first and second modifying particles is at least 15 µm, preferably at least 25 µm and more preferably at least 30 µm and/or the difference of the minimum particle size d(10) of the first and second modifying particles is at least 10 µm, preferably at least 15 µm and more preferably at least 20 µm and/or the difference in the mean particle size d(50) of the first and second modifying particles is at least 10 µm, preferably at least 20 µm and more preferably at least 25 µm, wherein the first modifying particles have a mean particle size d(50) between 70 µm and 110 µm and the second modifying particles have a mean particle size d(50) between 90 µm and 150 µm.

4. Coating composition according to claim 2 or 3, wherein the first and second modifying particles are glass particles, further **characterised in that** polyurethane based modifying particles are added as third modifying particles.

5. Coating composition according to any of the preceding claims, **characterised in that** the composition further comprises silica.

6. Coating composition according to any of the preceding claims, **characterised in that** the viscosity of the composition is between 300 and 600 mPas, preferably between 350 and 500 mPas and more preferably between 400 and 450 mPas at 50°C.

7. Coating composition according to any of the preceding claims, **characterised in that** the modifying particles have a spherical shape with a sphericity of at least 0.7, preferably at least 0.8 and even more preferably at least 0.85.

8. Coating composition according to any of the preceding claims, **characterised in that** the modifying particles comprise functional groups on their surface, such as unsaturated bonds, preferably unsaturated carbon-carbon bonds and more preferably carbon-carbon double bonds.

9. Coating composition according to claim 6, **characterised in that** the functional groups of the modifying particles are vinyl, allyl, acrylate or methacrylate groups, mixtures thereof and/or derivatives thereof.

10. Coating composition according to any of the preceding claims, **characterised in that** the unsaturated prepolymers are selected from the group consisting of acrylate and/or methacrylate and/or vinyl and/or allyl functionalized polyurethanes with a number average molecular mass (Mn) between 2000 and 60000g/mol, preferably between 3000 and 20000 and more preferably between 3000 and 10000 g/mol.

11. Coating composition according to any of the preceding claims, wherein the coating composition hardens to a transparent coating layer.

12. Coating made by using a coating composition according to any of the preceding claims, **characterised in that** the modifying particles are embedded into the matrix and less than 1/3 of the modifying particles protrude from the final surface.

13. Coating method, comprising the steps of:
i. providing a substrate, in particular a construction material;
ii. applying a first layer of a first liquid coating composition onto said substrate;
iii. optionally applying a second layer of a second coating composition onto the first layer, preferably a decorative coating layer, more preferably a print, even more preferably a digital print and most preferably an inkjet or electro photographic-print;
iv. optionally applying a third layer of a third liquid, radiation curable coating composition onto the first or second layer;
v. applying a fourth layer, the fourth layer comprising a coating composition according to any of the preceding claims.

14. Coating method according to claim 13, **characterised in that** the first coating composition comprises pigments, preferably color pigments and even more preferably white pigments.
